# EUROPEAN PATENT APPLICATION

(11) **EP 1 063 202 A2**
(43) Date of publication of application: **27.12.2000**
(21) Application number: 00112534.3
(22) Date of filing: 13.06.2000
(51) Int. Cl.: C02F 3/34

(54) **Biotreatment of surfactants in wastewater**

(30) Priority: 14.06.1999 IL 13044799; 14.06.1999 IL 13044899
(71) Applicant: ZOHAR DETERGENT FACTORY, 19239 Kibbutz Dalia (IL)
(72) Inventor: Vashitz, Oded, 19239 Kibbutz Dalla (IL); Gorelik, Ester, Yogneam Illit (IL); Sivan, David, 19239 Kibbutz Dalia (IL)
(74) Representative: Long, Giorgio

(57) **Abstract**

The present invention provides a process for the industrial-scale biotreatment of wastewater containing high concentrations of organic contaminants, comprising contacting the wastewater to be treated with the bacterial consortium BIO-V, (deposition no. ATCC 202214).

## Description

### Field of the Invention

The present invention is concerned with a process for the biotreatment of wastewater containing organic contaminants, particularly detergents, using a consortium of selected bacteria. The invention also provides apparatus for carrying out said process.

### Background of the Invention

Surfactants are the active components in detergents. The world use of surfactants is above 4,000,000 ton/year, where the major constituent, about 50% of the total, is Linear Alkylbenzene Sulfonate (LAS). Most of the surfactants are discharged into natural water systems, after different degrees of treatment. Much research has been performed on the biodegradation of LAS. In the light of this research and after more than 30 years of use, the final degradation products of LAS are considered safe for the environment. A recent large scale risk assessment study showed that 99% of the major surfactants in Europe were removed by sewage treatment plants. The study concludes that the removal efficiency depends on the design of these treatment plants.

Detergent manufacturers, on the other hand, face considerable economic and ecological constraints on effluent disposal. Waste streams with LAS concentrations of 100 mg/l or higher are usually toxic to the biomass in standard biological waste treatment plants. The upper acceptable limit for municipal treatment plants is ca. 40 mg/l LAS. Wastewater streams from industrial laundries contain 100-600 mg/l LAS and untreated wastewater from detergent manufacturing plants can reach more than 5000 mg/l LAS. Most biotreatment plants operators request that such wastewater will be pretreated before accepting it for treatment in conventional municipal plants. LAS and nonionic detergents based on Alkyl Phenol Ethoxylates, are more resistant to biodegradation than other detergents like Fatty Alcohol Sulfates and 'soft' nonionic detergents.

The following physical and chemical methods for the treatment of highly concentrated detergents in waste streams have been reported. All have some limitations, and none has found acceptance as the industry standard.

### Prior Art Methods:

1. Separation of anionic detergents by adsorption to a specific water-insoluble polymer. The detergent-polymer sludge is separated in a conventional biotreatment plant. The toxic detergent-polymer concentrate is eventually sent to a hazardous waste treatment site at high cost.
2. A method similar to Prior Art Method No. 1, but one that is based on a cationic flocullant. Anionic surfactants such as LAS are precipitated as a sludge. The main disadvantages are high cost of the flocullant and of sludge disposal.
3. Chemical decomposition of detergents by oxidation, using ozone or hydrogen peroxide. The use of ozone, produced on site, is expensive and suitable mainly for polishing applications of wastewater after treatment.
4. The 'low pressure wet oxidation' technique was reported to be cheaper than the above methods, but in absolute terms is still expensive. Tests with high surfactant waste streams from a detergent plant were discontinued.
5. A similar solution is the thermocatalytic oxidation of hazardous wastewater at 400-700 °C. High oxidation efficiency was reported for nonionic detergents. The cost of treatment, however, is high.
6. A process based on flocculation and sedimentation of detergents and other contaminants. An additional step of polishing by electro-catalytic method or by reverse osmosis (RO) membranes is needed for proper removal of detergents. Daily flocculant adjustment is needed to achieve good separation. Disposal of toxic concentrated sediment streams is expensive.
7. A two stage membrane separation process, composed of micro- or ultra-filtration followed by RO. The RO purified water can be recycled for use in production units. Frequent membrane cleaning and replacement is needed. The disposal of the concentrate streams is an expensive process.
8. Other methods such as natural or induced evaporation are also used, but these are expensive and have undesirable ecological side effects.

While conventional biological treatment methods may be used for the purification of effluents containing low concentrations (< 40 mg/l) of LAS and similar surfactants (e.g. domestic wastewater), the higher concentrations found in industrial waste (typically 1,000-10,000 mg/l) present a much greater challenge, for which, thus far, no suitable biological solution has been found. It may be demonstrated, for example, that individual bacterial species isolated from the soil and wastewater of a detergent factory are inactive or only partially active in degrading LAS when present at these high concentrations. Even when the biological system is capable of degrading compounds such as LAS and anionic or non-ionic detergents, the degradation process is too slow.

Dilution for biotreatment is usually not practical, as a dilution factor of 50 times or higher is required. Anaerobic biodegradation of detergents is not complete and is not recommended due to the evolution of hydrogen disulfide and unpleasant odors.

As stated above, the rate of biodegradation of anionic and non-ionic detergents by bacteria normally present in conventional biotreatment systems is low. The inability to reduce the concentration to the extent that such wastewater after treatment can be released into the biosphere, has created various difficulties. This is particularly true where insufficiently treated water containing these materials are released in areas where the water supply is naturally confined or where the water table is particularly high.

With the increasing concern for minimization of the problems arising from water pollution, biological processes utilizing microorganisms are being industrially employed in increasing numbers. High activity in research and development of wastewater biotreatment processes is taking place, with priority to development of improved microbial strains for use in industrial wastewater treatment facilities.

Microbial degradation of LAS has been limited to a handful of organisms. Using pure cultures, it has been shown that many bacterial species partially degrade LAS but do not completely mineralize it. These bacterial isolates degrade only the alkyl chain and do not cleave the sulfonated aromatic ring (Swisher, R.D (1987) Surfactant Biodegradation).

LAS mineralization is mediated by consortia of microorganisms rather than single organisms. Several consortia described in the literature are able to degrade LAS at low concentrations (up to 100 mg/l) and .after long incubation periods (Jimenez L. *et al,* 1991, Appl. Environ. Microbiol, May: 1566-1569; Sigoillot J.C. *et al,* 1992, Appl. Environ. Microbiol., Apr: 1308-1312; Hrsak D. *et al*, 1993, prehrambeno-tehnol. biotehnol. rev. 31: 7-14). On the other hand, little is known about the behavior and the degradation potential of these microorganisms in industrial wastewater. (JP 70,029,789).

Immobilized bacteria attached to inert support material have been used widely in wastewater treatment systems. In such immobilized cell systems it is possible to retain a high cell density, even under wash-out conditions. For cells with a low specific growth rate, immobilization can improve the reactor performance in comparison to free cell systems. It is also well known that wastewater treatment by immobilized bacteria cells, is less sensitive to sharp changes of pH, temperature and composition, in comparison with processes utilizing free cells. Some immobilized microorganisms tolerate higher contaminant concentrations than do their non-immobilized counterparts.

The efficiency of biotreatment systems is greatly improved by immobilization of the bacteria onto a porous matrix (RU 2,039,013; JP 4,187,086). A major limiting factor in the use of these immobilized cell systems in biotreatment applications is the rate of oxygen transfer to the bacterial cells. Consequently, the design and incorporation of efficient aeration techniques are key factors in the design of bioreactors for use with the aforementioned biotreatment systems. Many attempts to model the aeration processes have been described in the literature (JP 5,567,314; US 4,510,057; US 5,441,640). However, to date, there have been no published reports of processes for the efficient industrial-scale biotreatment of high concentration surfactant contaminants in wastewater, based on the use of an adapted bacterial consortium, or of apparatus to carry out such processes.

Up until now, there have been no reports in the literature of simple cell systems which can be used for the biotreatment of foaming industrial wastewater, containing LAS in high concentration (up to 2000-3000 mg/l).

### SUMMARY OF THE INVENTION

It has now been found, and this is an object of the invention, that the bacterial consortium BIO-V may be used in the biotreatment of wastewater containing high concentrations of organic contaminants, particularly surfactants. The bacterial consortium BIO-V has been deposited with the American Type Culture Collection (ATOC), of 10801 University Boulevard, Manassas, VA 20110-2209, USA on April 8, 1999, and bears the accession number ATCC 202214. The term "bacterial consortium" is meant to indicate a mixture of different bacteria that cooperate, in a synergistic manner, toward the same result. In this case, specifically, the ultimate desired result is the degradation of detergents.

The invention is primarily directed to a process for the industrial-scale biotreatment of wastewater containing high concentrations of organic contaminants, comprising contacting the wastewater to be treated with the bacterial consortium BIO-V, ATCC 202214.

The invention is further directed to a biotreatment process for the removal of high concentrations of organic contaminants from wastewater on an industrial scale. A key feature of this process is the high efficiency of oxygen transfer to the immobilized bacterial in the absence of foaming effects. Preferably, this process is performed in a mainly aerobic environment and comprises the steps of:
a. adaptation of the bacterial consortium to the organic contaminants by co-incubating the bacteria with the detergent toward which it is desired to promote bacterial degradative activity;
b. immobilization of the adapted bacterial consortium onto an immobilization device;
c. biodegradation of organic contaminants present in the wastewater by contacting said adapted, immobilized bacterial consortium with the wastewater to be treated.

As mentioned above, a key feature of the process of the invention is that there is a high efficiency of aeration, but without inducing foaming effects. While the linear speed of the bacterial immobilization devices relative to the wastewater containing the organic contaminants may be set at any value, whereby sufficient aeration is achieved with minimal foaming, the invention is particularly directed to linear speeds of between about 15 cm/sec and about 30 cm/sec. It is most particularly directed to linear speeds of about 10 cm/sec.

The immobilization step of the process described above may be performed in one of two different ways: either after adaptation of the bacterial consortium to the organic contaminants, or alternatively, essentially simultaneously with the adaptation of the bacterial consortium to the organic contaminants.

Preferably, the immobilization device comprises a porous sponge.

The process of the invention may be performed in the following modes:
a. continuous mode - wherein the immobilized bacterial consortium is subjected to a constant controlled flow of wastewater in and out of the vessel containing said consortium;
b. semi-continous mode - in which a small quantity of wastewater is fed into the vessel containing the immobilized bacterial consortium, at predetermined time intervals, an equivalent small amount of treated wastewater leaving said vessel at said time intervals, said small quantity being substantially less than the maximum operating capacity of said containment vessel in which the process is performed;
c. batch mode - in which a quantity of wastewater is fed into the containment vessel holding the bacterial consortium at time intervals that may be determined according to the operating conditions, an equivalent quantity of treated wastewater leaving said containment vessel at the same time intervals, said quantity being determined according to operating conditions, up to a maximum that is equivalent to the maximum operating capacity of said containment vessel.

The process of the invention may be used for the biotreatment of a number of different contaminants, particularly detergents. As a group, detergents may be comprised of many different chemical compounds. According to a preferred embodiment of the invention, the detergents comprise surfactants.

Although the process of the invention may be used for removing surfactants present at a wide range of concentrations (including low concentrations such as 40 mg/L), it is particularly directed to the treatment of wastewater containing surfactants at concentrations of greater than 200 mg/L. In another aspect, the invention is directed to a process for the biodegradation of detergents when present in wastewater containing surfactants at concentrations greater than 5000 mg/L.

According to a preferred embodiment of the invention, the surfactants present in the wastewater comprise anionic surfactants, particularly linear alkylbenzene sulfonate (LAS).

According to another preferred embodiment, the process of the invention is used for the biotreatment of nonionic surfactants, particularly alkyl phenol ethoxylate.

The process of the invention is further directed to the biotreatment of other classes of surfactant, such as amphoteric and cationic surfactants.

The invention also encompasses an apparatus suitable for carrying out the mainly aerobic process for the biotreatment of wastewater described hereinabove. This apparatus, which is characterized by its ability to generate high aeration levels with minimal foam production comprises the following components:
a. a containment vessel for holding the wastewater to be treated;
b. a frame mounted on a shaft, said shaft being capable of movement at a controllable speed in said containment vessel;
c. immobilization devices for bacterial cultures that are carried in said frame;
d. inlet and outlet conduits for controlled flow of wastewater into and out from the containment vessel.

While immobilization devices for use in the invention may be manufactured from many different materials, in several different forms, the invention is particularly directed to the use of porous sponges. According to a preferred embodiment of the invention, said porous sponges comprise flexible foamed polyurethane. However, the material of which said porous sponges are formed is not limited to the abovementioned example. Said sponges may be manufactured from any suitable material that permits them to carry out their designated function, that is, the immobilization of the bacterial consortium BIO-V. Likewise, the sponges (or other forms of bacterial immobilization device) may be present in various formats. In one preferred embodiment of the invention, the porous sponges are in the form of round disks, said disks having a thickness of about 1 to 5 cm. These disks are preferably arranged in a parallel array, said array being centrally mounted on the rotating shaft.

In another preferred embodiment, the porous sponges are in the form of cubes having a volume of between 1 and 125 cm³, said cubes being contained in a wire cage attached to the rotating frame, said cage being of a construction that permits free flow of wastewater therethrough.

The invention further provides for the use of immobilization devices comprising porous sponges in the form of hollow cylinders with an internal mechanical support, attached to the rotating frame, said hollow cylinders having an external diameter of 8 to 50 cm, and an internal diameter of between 3 and 40 cm.

The apparatus of the invention, as described hereinabove, may he operated at any rotational speed that permits said apparatus to carry out the process of the invention. In a particularly preferred embodiment, however, the shaft of the apparatus turns with a rotational speed of about 0.3 r.p.m. to about 5 r.p.m.

While a single unit of the apparatus may be used to perform the above-described biotreatment processes, the invention also encompasses the use of a modular apparatus comprising two units of the apparatus, each of which said unit of apparatus being connected serially, the outlet counduit of one unit being connected to the inlet conduit of the second unit.

The invention also encompasses the use of bacterial consortium BIO-V for the biotreatment of industrial wastewater.

In a further aspect, the invention also relates to the use of bacterial consortium BIO-V for the preparation of immobilization devices comprising said bacterial consortium and a carrier.

The present invention also provides the bacterial consortium BIO-V.

All the above and other characteristics and advantages of the invention will be further understood from the following illustrative and non-limitative examples of preferred embodiments thereof.

### Brief Description of the Drawings

The present invention will be more clearly understood from the detailed description of the preferred embodiments and from the attached drawings in which:
Fig. 1 is a graph depicting the primary biodegradation of 2.0 g/L LAS by the immobilized bacterial consortium BIO-V and following adaptation, in a shake flask.
Fig. 2 is a graph depicting the primary biodegradation of different concentrations of LAS by the immobilized bacterial consortium BIO-V, in a shake flask.
Fig. 3 is a drawing showing the construction of the preferred contactor unit of the apparatus of the invention.
Fig. 4 is a graph depicting the process of primary degradation of LAS and other anionic surfactants in raw wastewater, by an adapted and immobilized bacterial consortium, BIO-V, during the initial period of operation of the pilot plant.
Fig. 5 is a graph showing the changes in concentration of LAS and other anionic surfactants during biotreatment in two consecutive batch plant units.
Fig. 6 is a graph depicting the course of a one-stage biotreatment of LAS and other anionic surfactants in industrial wastewater, using a batch pilot plant.
Fig. 7 is a graph showing the changes in concentration of LAS and other surfactants during biotreatment of concentrated effluent from a detergent factory, using two consecutive continuous mode plant units.

### Detailed Description of Preferred Embodiments

For purposes of clarity and as an aid in the understanding of the invention, as disclosed and claimed herein, the following abbreviations are defined below:
- **BIO-V** -: a defined consortium of bacteria, selected for their ability to degrade surfactants and other organic contaminants with high efficiency, deposited with the ATCC on April 8, 1999, bearing the accession number ATCC 202214.
- **TOC** -: Total Organic Carbon.
- **COD** -: Chemical Oxygen Demand
- **LAS** -: Linear Alkylbenzene Sulfonate
- **APE** -: Alkyl Phenol Ethoxylate
- **NPE** -: Nonyl Phenol Ethoxylate

### Example 1

### Isolation and selection of LAS-degrading bacterial consortium

The bacterial consortium was constructed by the following procedure: samples of wastewater (20 ml) and soil (5g) of a detergent factory were inoculated into minimal medium (100 ml). 10-20 ml of LAS basal mineral solution were added daily to the inoculated samples, increasing gradually the LAS concentration in the feed from 100 to 2000 mg/l. Every five days, 10 ml samples were withdrawn for analysis. This procedure was continued for a three months period. The basal mineral medium contained the following components (g/l in distilled water): NaHCO₃ : 0.6; KH₂PO₄ : 0.6; NH₄Cl: 0.5; Na₂SiO₃: 0.02; yeast extract: 0.5; LAS : 0.1 to 2.0. The pH was corrected to 9.0 by NaOH.

Primary biodegradation of anionic surfactants was determined as LAS by Methylene Blue Active Substance (MBAS) method (ASTM D 1681). The temperature was maintained at 25°C±1, and the pH at 8-9 during the entire course of the process of consortium selection and structuring.

Inocula from final samples of the procedure described above, were used to establish fresh cultures, with LAS as the only carbon and sulfur source. 100 ml fresh mineral medium was inoculated by 15% final inoculum of the liquid mixture and incubated with shaking at 120 r.p.m. and 28°C.

The final inoculum was able to degrade LAS in fresh mineral medium in concentration of 2 g/l at 24 hours. Samples from final inocula were plated on nutrient yeast agar containing 100 mg/l LAS. The agar plates were incubated at 30°C for 24 hours.

The bacterial consortium isolated by the above procedure was named BIO-V. This consortium was deposited with the American Type Culture Collection (ATCC) in accordance with the Budapest Treaty, and allocated the Accession No. ATCC 202214.

### Example 2

### Process of adaptation and immobilization of the bacterial consortium

The adaptation procedure is essential for adjusting the bacterial consortium to high surfactant concentration. The following general adaptation procedure was performed:

Bacterial consortium BIO-V, was grown on nutrient yeast agar plates with 0.1 g/l LAS. A 1 liter Erlenmeyer flask with 100 ml. basal mineral medium containing 2 g/l LAS was inoculated with a loopful of the bacterial consortium BIO-V taken from agar plates. Degradation experiments were performed with high cell densities. The concentration of the biomass was such as to give an absorption reading of O.D.₆₀₀ = 1.7-2.0, as measured with an Ultrospec III spectrophotometer (Pharmacia LKB, Biochrom Ltd).

The flask was incubated aerobically on a shaker (120 r.p.m.; 28°C). Samples (5 ml) were removed from the culture broth at intervals of 24 hours for analysis. Complete primary biodegradation of LAS was achieved over the relatively long period (144 hours) that was required in order to achieve sufficient adaptation of the bacterial consortium.

This biodegradation process was shown to be more efficient when the cells of the bacterial consortium BIO-V were immobilized on a porous media. A sponge matrix with open pores structure was used. The matrix can be readily tailored to the process requirement with regard to surface area, shape and size. An advantage of this porous carrier is the excellent mass transfer between the external and internal fluid phase, by internal convection through the pores system. Another advantage is the large surface area exposed and the high mass transfer rate of nutrients and oxygen to the bacteria. In contrast, in the popular gel immobilized cell systems, the nutrient and oxygen transport to the immobilized cells is mainly by diffusion. Binding of the consortium cells to the carrier surface is enhanced by the specific surface properties of the sponge material. Spongy carrier cubes with readily adapted and immobilized cells of bacterial consortium BIO-V on the pores surface, was used repeatedly for inoculation. In the first inoculation, a loopful of BIO-V consortium cells was added to an Erlenmeyer flask containing fresh LAS (2 g/l) basal minimal medium, in addition to the carrier containing the adapted and immobilized consortium cells. In successive transfers, only the sponge carrier (9-10 cubes per transfer) with the adapted and immobilized cells, was used as inoculum. Up to 14-15 consecutive inoculations were performed. One additional flask of basal minimal medium with 2 g/l LAS was used as a control to correct for absorbance of LAS in spectrophotometric measurements. All immobilization steps were performed under sterile conditions with sterilized solutions.

Two techniques for the immobilization process were used:
1. The processes of adaptation and immobilization of the bacterial consortium cells were performed serially;
2. Adaptation and immobilization of the bacterial consortium were both performed in one step, in the same vessel.

In the first technique a loopful of cells of bacterial consortium from nutrient yeast agar plates containing 100 mg/l LAS, was inoculated into a 1 liter Erlenmeyer flask with 100 ml basal mineral medium, containing 2 g/l LAS. Growth up to O.D.₆₀₀ = 1.7-2.0, was carried out at 28°C in a shaker at 120 r.p.m. After 144 - 166 hours cultivation, when about 90-100% of the LAS had been degraded, 9-10 autoclaved 10 mm cubes made of porous sponge, were added to the flask. The flask was incubated in a shaker (120 r.p.m., 30°C) for 48 hours. After the period of adaptation and immobilization, all the sponge cubes were transferred to a 1 liter Erlenmeyer flask containing fresh basal mineral medium (100 ml) with 2 g/l LAS.

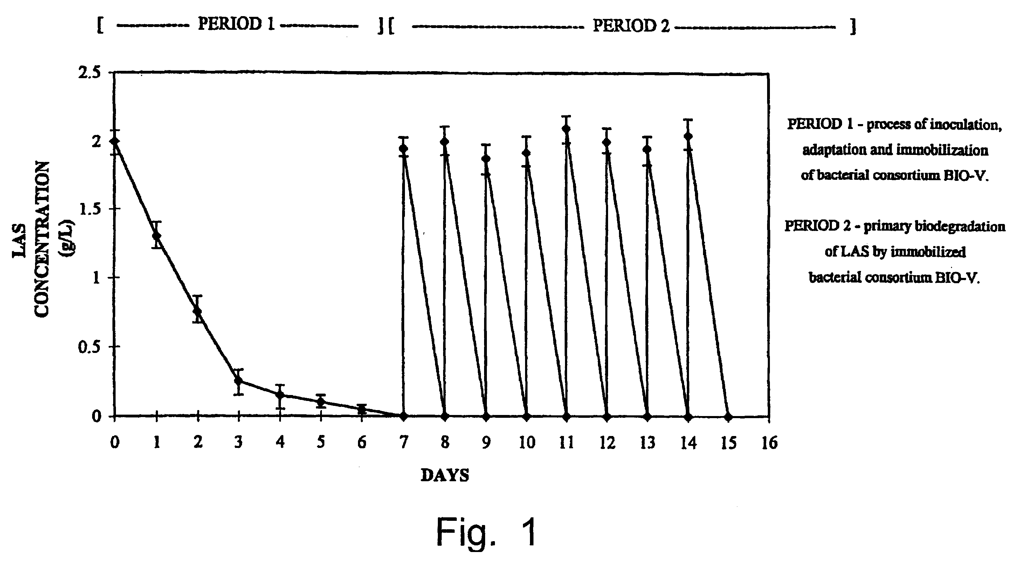

In the second technique, the processes of adaptation and of immobilization of the bacterial consortium BIO-V were performed together. At time zero, a loopful of cells of bacterial consortium from nutrient yeast agar plates, prepared with 100 mg/l LAS, were added with 9-10 sponge cubes into a 1 liter Erlenmeyer flask, containing 150 ml basal mineral medium with 2 g/l LAS. The flask was incubated in a shaker at 28°C and 120 rpm. Primary biodegradation of 90-100% was achieved after 144 - 166 hours. From this stage onwards, the procedure was identical to that described previously for the first technique (Fig. 1). Various modifications may also be introduced into the aforementioned techniques.

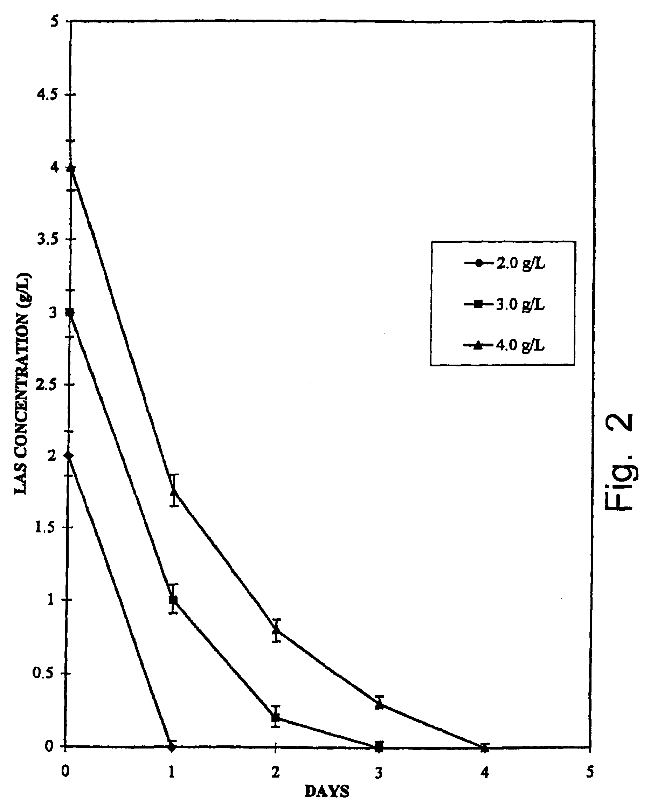

The immobilized bacterial consortium BIO-V degraded 2.0 g/l LAS in less than one day, 3.0 g/l in 3 days, and 4.0 g/l in 4 days incubation in mineral medium, as determined by MBAS analysis (Fig.2). TOC analysis showed that more than 92% of the organic compounds were mineralized to CO₂ after four days of treatment by the procedure described above. This is an indication that LAS is not broken to organic fragments, which may be poisonous in the treated wastewater, but is completely mineralized, as defined in conventional procedures.

This consortium can also degrade other anionic surfactants like sodium laureth sulfate, sodium lauryl sulfate, stearate soap, fatty acid as well as non-ionic surfactants, including alkyl phenol ethoxylates (APE). Primary biodegradation of nonionic surfactants was determined by a colorimetric method (Milwidsky B.M., 1969, Analyst 94: 377). Results for the biodegradation of surfactants by immobilized BIO-V over a 24 hour period, are shown in Table I.

**Table I**

| **SURFACTANT** | | **Initial concentration (g/L)** | **% Biodegradation** |
|---|---|---|---|
| Anionic detergents | Sodium Lauryl Alcohol Sulfate | 2.5 | 100 |
| | Sodium Lauryl Alcohol Ether Sulfate | 2.5 | 100 |
| Nonionic detergents | Poly Ethylene Glycol Ethoxylate | 1.0 | 100 |
| | Alkyl phenol ethoxylate | 1.0 | 100 |
| Stearate soap | Fatty acid | 1.0 | 100 |
| | Stearic acid | 1.0 | 100 |

### Example 3

### Storage of bacterial consortium BIO-V

Preservation of the bacterial consortium BIO-V was made by lyophilization. The consortium from lyophilized samples was suspended in a 250 ml Erlenmeyer flask, containing 40 ml nutrient yeast broth, at 28°C, in a shaker at 120 r.p.m.. After 24 hours cultivation, the bacterial suspension was plated in 0.2 ml amounts, on nutrient-yeast agar for 24 hours at 28°C. A loopful of cells of bacterial consortium from the agar plates was inoculated into a 1 liter Erlenmeyer flask with LAS basal mineral medium. Then, the previously-described procedures of adaptation, immobilization and LAS degradation was repeated. The liquid suspension containing cubes of sponge bearing the adapted and immobilized cells of bacterial consortium BIO-V after degradation of LAS, was preserved in a refrigerator (4°C) for one year, with good viability. Inocula for new nutrient yeast agar plates was collected from biofilm on the surface of the carrier.

### Example 4

### Identification of isolates of the bacterial consortium BIO-V

Bacterial strains of the consortium BIO-V were isolated from nutrient agar Petri dishes, which were inoculated by 0.1 ml of serial dilutions. Single colonies were picked and isolated as pure culture. A total of ten strains were isolated. Classical microbiological identification techniques were applied to identify pure strains (Holt J.G. (ed.), (1984), Bergey's Manual of systematic bacteriology, vols. I-IV, 10th ed. Williams and Wilkins, Baltimore).

On the basis of the cultural and biochemical characteristics, the following component strains were identified:
*Pseudomonas cepacia*
*Pseudomonas aeruginosa*
*Pseudomonas maltophilia*
*Pseudomonas pseudoalcaligenes*
*Pseudomonas alcaligenes*
*Alcaligenes paradocsus*
*Alcaligenes denitrificans*
*Alcaligenes eutrophus*
*Citrobacter freundii.*
*Pseudomonas spp*.

Partial compositions of the consortium cultures, with one or more of the above bacterial components missing, were unable to degrade LAS.

Bacterial consortium BIO-V is a selected microbial combination designed to provide effective biodegradation of LAS and other surfactants in aerobic biological wastewater treatment systems. It exists and is used in various forms including, but not limited to: liquid suspension, immobilized on a carrier, lyophilized, dried, mixed with carriers, etc.

### Example 5

### Description of typical biotreatment plant

The consortium BIO-V is composed of aerobic facultative bacteria. Consequently, optimal biodegradation of surfactants is achieved when the bioreactor operates under aerobic conditions. A major problem encountered in standard plants for biotreatment of surfactants is that it is technically very difficult to obtain sufficient aeration for optimal bacterial growth without also causing considerable foam formation. A special contactor unit design, which is part of the invention, was developed in order to maximize the oxygen supply to the biomass while maintaining minimal foam formation. Another benefit of the invention, which results from the specific contactor design, is high mass transfer rate between the treated wastewater and the biomass. Additional benefit is the high stability of the biomass, low sensitivity to concentration variations and fast recovery from concentration shocks. As a result, the effectiveness of biodegradation is highly increased.

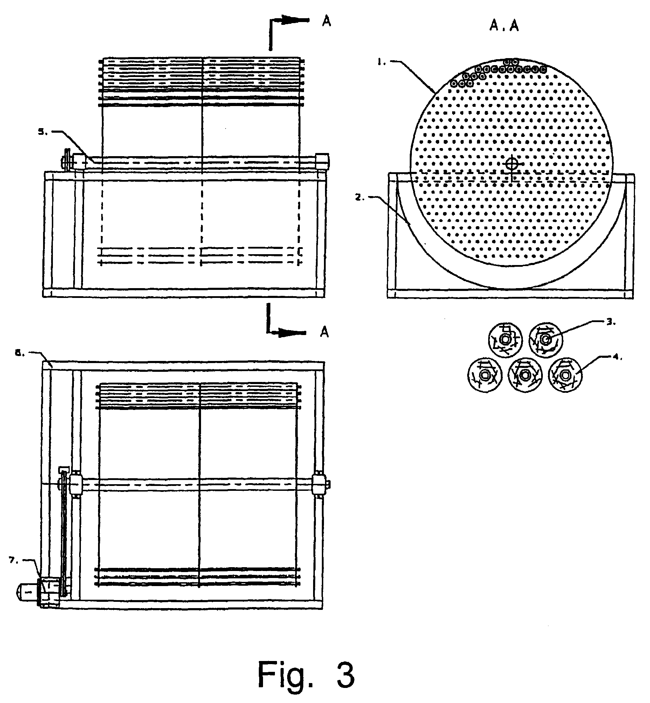

The contactor consists of a modified Rotary Biological Contactor (RBC), as shown in Fig. 3. A frame 1 carrying porous sponge elements, rotates in a large vessel 2 which contains the wastewater, in a way that the sponge elements are submerged and aerated periodically.

The bacterial consortium cultures adhere to the inner surfaces of the sponge cavities, and are immobilized on that surface. An important feature of the porous sponge, which is an essential part of the invention, is that the sponge cavities are open and connected one with another. Thus, free flow of wastewater free or dissolved oxygen and nutrients is maintained across the immobilized bacteria, with high contact area and high mass transfer rate. High biomass concentration of immobilized cells is achieved and most of the biodegradatory activity is inside the sponges. The unbound bacteria in the free wastewater in the vessel also make a contribution to the total biodegradation.

The foaming problem is solved by controlling the rotation speed of the frame in the wastewater vessel. The mild but efficient internal aeration within the internal cavities of the sponges also contributes to foam reduction.

### Mechanical construction and technical data

Details of the construction of the contactor unit of the apparatus of the invention are given in Fig. 3. The frame 1 is rotating in a vessel 2 which contains wastewater. Any form of vessel can be used, but the preferred type is a horizontal cylinder. The shaft 5 is usually above the water level, but construction with a submerged shaft can be used as well. The shaft is rotated by means of the transmission 7. All of the above-mentioned elements are housed in a base unit 6. The sponge elements 4, whose function is that of carriers for the bacterial consortium,, are immersed and aerated at each rotation of the frame. The level of immersion is controlled by the level of water in the vessel, which can be varied between empty and full vessel. The temperature of the wastewater inside the vessel can be regulated by a heating element.

The sponges serve as a carrier for the bacteria and form a good environment for growth. The sponge material is built with internal inter-connecting pores and cavities. It can be flexible or hard and may be made of synthetic or natural materials. The flexible materials typically have a hardness of 25 %: 25-75 lb. preferably 50 lb, and are exemplified by, but not limited to, flexible foamed polyurethane, polypropylene, polystyrene, latex and rubber. The abovementioned hard materials are typified by, but not limited to, glass, metal and ceramic materials. Typical physical parameters for all of the above materials are: density 18-30 kg/m³; porosity up to 0.985. Pore size is typically between 0.3 and 0.8 mm, but may fall within the range of 0.1 - 5.0 mm.

The sponge elements can be formed as cylinders, cubes of different shape and size, plates, or in any other form. Three main forms of sponges were tested:
1. Round-flat disc plates, which are 1-5 cm thick, built in parallel to each other and perpendicular to the water surface. The plates are mounted on the main shaft and stabilized with supports. The entire assembly is inserted into the frame 1.
2. Cubes with a volume of 1 - 125 cm³, held in a rotating wire cage that allows free flow of wastewater in and out of the cage.
3. Hollow cylinders with internal mechanical support provided by the 1'' tubes . External diameter of 8-50 cm, typically 10 cm, and internal diameter of 3-40 cm, typically 5 cm.

The plant may be operated in several different modes:
1. continuous - with constant controlled flow of wastewater in and out;
2. semi continuous - wherein small quantities of wastewater are fed to the vessel at short intervals;
3. batch - wherein the vessel containing the wastewater is periodically filled and discharged. In the batch mode, the quantity of water to be replaced every cycle can be controlled up to the full volume of the vessel; the cycle time may be controlled in response to the operating conditions. Typically, the cycle time is one day, but other values can be used.

The speed of rotation of the shaft is determined by the aeration requirements and the foaming tendency of the wastewater. The maximal linear speed of the sponge elements in foaming wastewater is in the range of 15-30 cm/sec, typically 10 cm/sec. In non-foaming wastewater higher speeds can be used. In the center of the rotating contactor, the linear speed of the sponge is lower, in proportion to the local distance from the center. The shaft speed is in the range of 0.3 - 5 rpm.

The biotreatment plant is composed of either one unit or of two consecutive units. The number of units depends on the inlet contaminant concentration and on the outlet purification requirements.

### Example 6

### Adaptation of bacterial consortium BIO-V in a pilot plant

Inoculation is the most important factor in industrial and pilot plant operation. Procedures for pilot plant and industrial plant inoculation by bacterial consortium and biofilm development are described below. The following general inoculation procedure was performed:

Starter cultures of the bacterial consortium BIO-V were grown at 30°C with shaking at 100-120 r.p.m., in 250 ml Erlenmeyer flasks containing 40 ml sterile medium (30 g/L Tryptic Soy Broth - TSB), which were inoculated with a loopful of the bacterial cells. Cell biomass was determined as optical density by measuring the absorbance at 600nm. O.D.600 Values of 1.5 to 1.7 were reached after about 12 - 16 hours of exponential phase growth.

In order to provide for the larger biomass volumes required for inoculation of a pilot plant of 200 litre, the bacterial consortium BIO-V was grown up in an enriched nutrient broth medium. The consortium was grown in 5 liter Erlenmeyer flasks, containing 1.5 liter sterile medium of the following composition: nutrient broth - 8 g/L; yeast extract - 0.5 g/L; LAS - 0.1 to 0.15 g/L, in distilled water. The 5 liter flasks were inoculated with a suspension of consortium BIO-V cells that were grown on TSB, and were incubated at 30°C in a shaker operating at 100 r.p.m.

After 24 hours growth, a suspension of bacterial consortium BIO- V cells was transferred into a pilot plant (volume 200 liter), together with wastewater containing detergents at a concentration range of 0.5 to 0.7 g/L. The volume of the transferred inoculum was about 25 - 30 liter in 3 additions of 8 - 10 liters each. Adaptation of the microbial culture in order to increase the degradation of the anionic detergents was carried out in a batch process for 2 - 3 weeks. At the end of this period, only 10% - 15% of the initial detergent concentration, was found in the wastewater, indicating that the degree of primary degradation was 85% - 90%. Wastewater, taken from the 200 liter pilot plant after purification with adapted bacterial cells was used to inoculate a 1000 liter pilot plant. The same procedure may also be extended to use in larger, industrial scale plants. Other consortia of aerobic or facultative anaerobic bacteria may also be used with the same process and apparatus for use in the treatment of lower concentrations of detergents or other contaminants. Inoculation can be performed as well by addition of the consortium in ready-made form, as dry powder, granulate or liquid concentrate.

### Example 7

### Process of immobilization of bacterial consortium BIO-V for wastewater treatment in a pilot plant

The cells of bacterial consortium BIO-V were immobilized by adsorption into the spongy matrix. This matrix with immobilized cells remained stable in a wastewater treatment plant for more than one year (total period of the pilot plant operation). The sponge matrix was not degraded chemically and adsorptive activity of the microorganisms was very high. A biomass concentration of 80 - 110 kg/m³ was achieved in a pilot plant. This high concentration of live, active bacteria was able to provide good degradation of the pollutants.

The concentration of cells in free suspension was dependent on the pollutant concentration in wastewater (TOC - 1845 mg/L, biomass - 4.2 kg/m³; TOC - 500 mg/L, biomass - 2.1 kg/m³). Immobilized biomass and biomass in free suspension were measured as dry weight.

Degradation is more efficient and easier to run in the apparatus of the present invention than in bacterial biofilm reactor systems, where bacteria encounter aerobic and anaerobic regions.

The predominant bacterial population is composed of Gram-negative aerobic bacteria: *Pseudomonas spp.* and *Alcaligenes spp*. Facultative anaerobic bacteria, for example: *Citrobacter spp*., are more adapted to the inner bacterial biofilm system with lower O₂ concentration. Complete mineralization of anionic detergents and other organic compounds in wastewater of detergent factory was achieved by integrating local aerobic and anaerobic conditions in the carrier.

A pilot plant was in operation for more than one year in industrial wastewater treatment employing immobilized microorganisms.

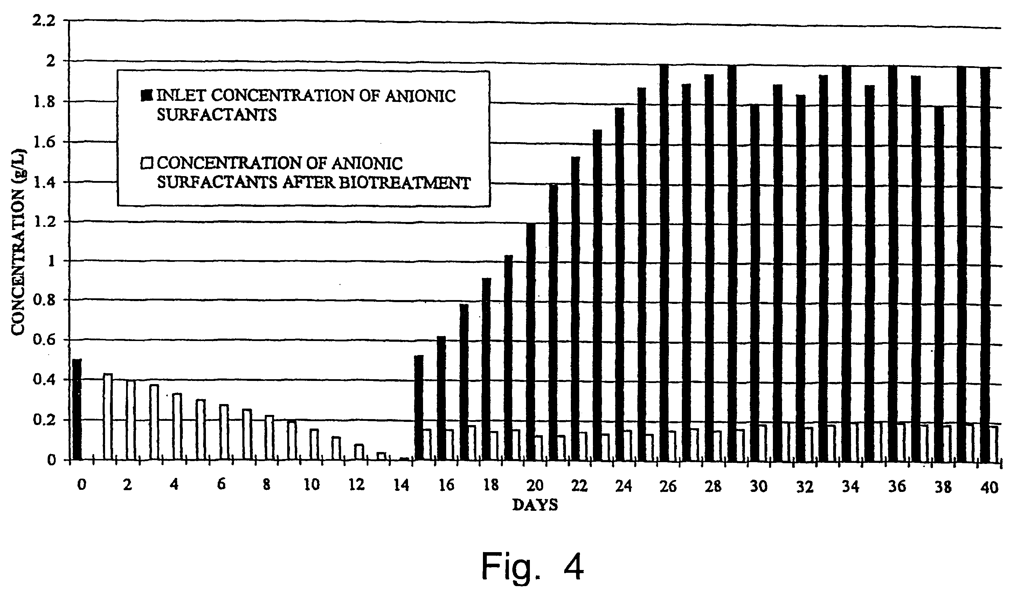

Immobilization of microbial cultures on a spongy matrix has been achieved only in batch operation of the pilot plant. The adsorption, adaptation and immobilization of the bacterial consortium BIO-V onto the sponge matrix were completed during the first 2 - 3 weeks. The adaptation, immobilization and inoculation procedures were operated at relatively low concentration of 0.5 - 0.7 g/L anionic detergents in wastewater. After this period, wastewater containing anionic detergents with gradually increased LAS concentration were added (Fig. 4), until normal industrial concentrations were attained.

Biotreatment of wastewater was performed in batch and continuous operation. Standard techniques (COD, TOC, colorimetric assays) were used to measure variables of interest during the reactor operation. A significantly higher rate of biodegradation was achieved, using pilot plants consisting of two consecutive units, both in batch and continuous operation.

### Example 8

### Biodegradation of surfactants and other pollutants in batch operation

The following procedure describes the biodegradation of wastewater derived from a detergent plant, containing high concentrations of anionic and nonionic detergents and other pollutants, by the use of immobilized cells of a bacterial consortium, in batch operation.

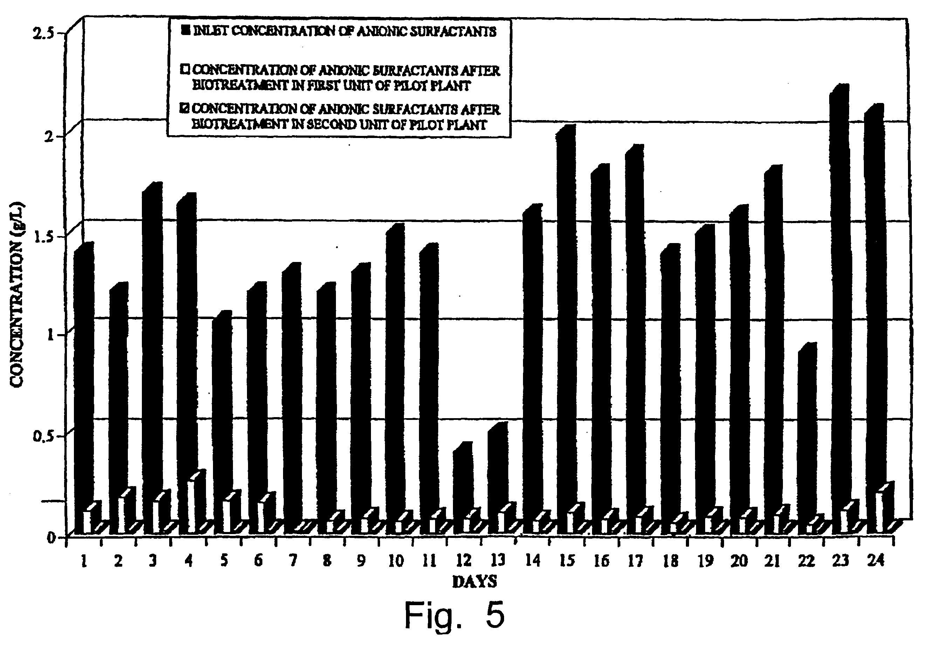

The previously described procedures of inoculation, adaptation and immobilization were repeated. The pilot plant was then filled repeatedly with raw wastewater and the treated water was emptied daily (Fig. 5). Pilot plants were operated in a hatch mode, with working volumes of up to 1,000 liters, for periods of mole than one year.

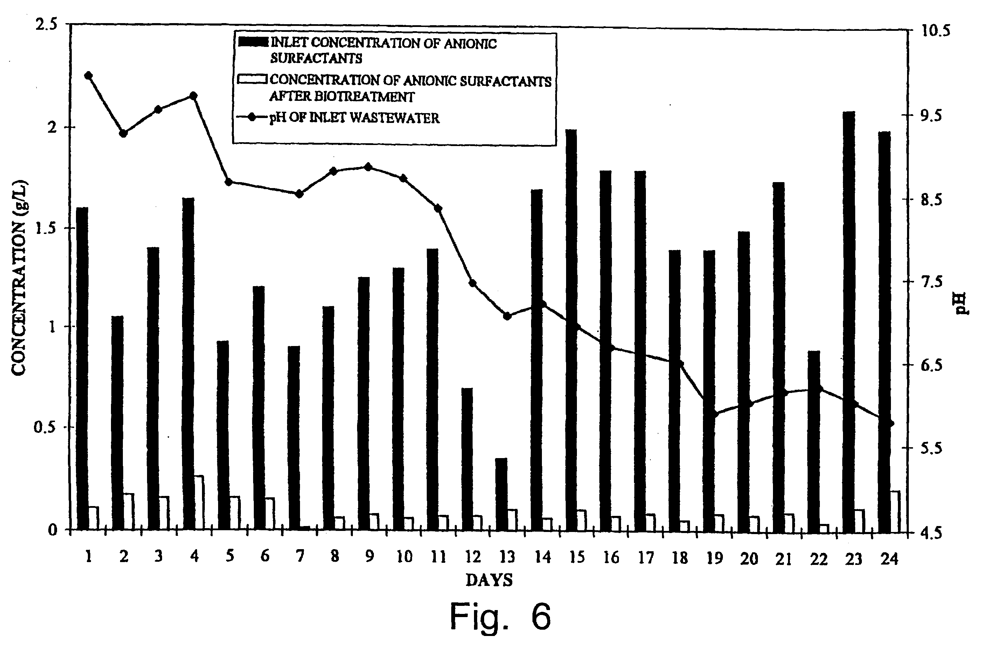

With inlet wastewater values of TOC 20,400 mg/L, COD 15,700 mg/L, anionic surfactants 2,150 mg/L, and nonionic surfactants 1,150 mg/L, immobilized consortium BIO-V was able to degrade 99.5% of the anionic surfactants in 48 hours in two stages of the pilot plant. At the same period, 97.6% of the organic compounds were mineralized to CO₂, as determined by TOC analysis (Table II). 90% reduction of the anionic surfactants (as LAS) was achieved in one stage (Fig 6).

During the period of use of the pilot plant, an assessment of the factors influencing the biodegradation process was made. Among the most important of these are the variability in inlet concentrations of pollutants, fluctuations in temperature and pH changes.

The degradation of anionic surfactants by immobilized bacterial consortium BIO-V was monitored in a batch operation at different initial detergent concentrations, from 500 up to 10,000 mg/L. No direct correlation could be observed between the concentration of anionic surfactants in wastewater and the degradation rate, up to inlet concentration of 1,500 - 2,000 mg/L LAS. With higher initial surfactant concentrations, from 2,000 to 10,000 mg/L LAS, the degradation time was prolonged.

Biodegradation operations were performed over a wide range of pH and temperatures. Efficient biodegradation was achieved using a temperature range of 14 - 30°C and a pH range of 6 - 10.

**Table II**

| POLLUTANTS IN WASTEWATER | | | | | | | | | |
|---|---|---|---|---|---|---|---|---|---|
| BIODEGRADATION OF SURFACTANTS (mg/L) | | | | BIODEGRADATION OF TOTAL POLLUTANTS (mg/L) | | | | % REDUCTION OF POLLUTANTS | |
| TOTAL ANIONICS (AS LAS) | | TOTAL NONIONICS (AS NPE) | | COD | | TOC | | COD | TOC |
| INITIAL | FINAL | INITIAL | FINAL | INITIAL | FINAL | INITIAL | FINAL | | |
| 2150 | <10 | 1150 | <10 | 15700 | 1200 | 20400 | 480 | 92.4 | 97.6 |
| Time of Biotreatment - 48 hours. LAS - Linear Alkylbenzene Sulphonate. NPE - Nonyl Phenol Ethoxylate. COD - Chemical Oxygen Demand. TOC - Total Organic Carbon. | | | | | | | | | |

### Example 9

### Biodegradation of surfactants in continuous operation

After sufficient microbial adaptation and immobilization, and after full anionic detergent disappearance from the effluent, the pilot plant operation was changed from batch to continuous mode. The prior use of batch mode before continuous operation was needed for the development of a dense biofilm of a good quality, which is essential for stable continuous operating conditions.

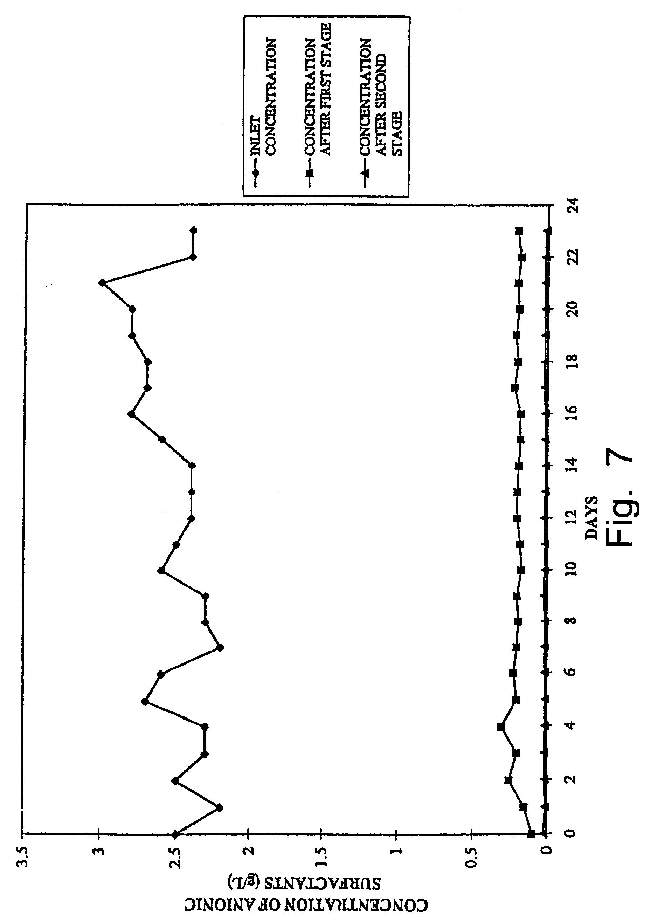

The sequential procedures of inoculation, adaptation and immobilization (described in Examples 6 and 7 above) were repeated. Continuous operation with different flow rates was tested. It was found that with the use of low flow rates, even higher concentrations of surfactants could be treated than could be achieved in batch mode. In continuous operation of a pilot plant, with retention time of about 33 hours and inlet concentration of Ca. 2,500 mg/L anionic surfactants, the outlet concentration after one day reached approximately 200 mg/L. In a second stage, this figure decreased to 10 - 20 mg/L (Fig. 7). Increasing the flow rate to give a retention time of 19 hours, resulted in a significant residual anionic concentration in the effluent of the first stage (500 - 700 mg/L ) and a long recovery period. Furthermore, at this higher flow rate, the biomass was washed out of the pilot plant.

While specific embodiments of the invention have been described for the purpose of illustration, it will be understood that the invention may be carried out in practice by skilled persons with many modifications, variations and adaptations, without departing from its spirit or exceeding the scope of the claims.

## Claims

1. A process for the industrial-scale biotreatment of wastewater containing high concentrations of organic contaminants, comprising contacting the wastewater to be treated with the bacterial consortium BIO-V, ATCC 202214.

2. A process according to claim 1, wherein the bacterial consortium BIO-V is used in a mainly aerobic environment in which there is high efficiency of oxygen transfer to said bacterial consortium, in the absence of foaming effects, said process comprising the steps of:
a. adaptation of the bacterial consortium to the organic contaminants by co-incubating the bacteria with the detergent toward which it is desired to promote bacterial degradative activity;
b. immobilization of the adapted bacterial consortium onto an immobilization device;
c. biodegradation of organic contaminants present in the wastewater by contacting said adapted, immobilized bacterial consortium with the wastewater to be treated.

3. A process according to claim 2, wherein the immobilization step is performed after adaptation of the bacterial contaminants to the organic contaminants.

4. A process according to claim 2, wherein the immobilization step is performed essentially simultaneously with the adaptation of the bacterial contaminants to the organic contaminants.

5. A process according to claim 2, wherein the immobilization device comprises a porous sponge.

6. A process according to claim 2, wherein said process is performed in continuous mode, in which the immobilized bacterial consortium is subjected to a constant controlled flow of wastewater in and out of the vessel containing said consortium.

7. A process according to claim 2, wherein said process is performed in semi-continuous mode, in which a small quantity of wastewater is fed into the vessel containing the immobilized bacterial consortium, at predetermined time intervals, and equivalent small amount of treated wastewater leaving said vessel at said time intervals, said small quantity being substantially less than the maximum operating capacity of said containment vessel in which the process is performed.

8. A process according to claim 2, wherein said process is performed in batch mode, in which a quantity of wastewater is fed into the containment vessel holding the bacterial consortium at time intervals that may be determined according to the operating conditions, an equivalent quantity of treated wastewater leaving said containment vessel at the same time intervals, said quantity being determined according to operating conditions, up to a maximum that is equivalent to the maximum operating capacity of said containment vessel.

9. A process according to claim 2, wherein the organic contaminants are detergents.

10. A process according to claim 9, wherein the detergents comprise surfactants.

11. A process according to claim 10, wherein the surfactant concentration is greater than 200 mg/l.

12. A process according to claim 10, wherein the surfactants comprise anionic surfactants.

13. A process according to claim 12, wherein the anionic surfactants comprise linear alkylbenzene sulfonate (LAS).

14. A process according to claim 10, wherein the surfactants comprise nonionic surfactants.

15. A process according to claim 14, wherein the nonionic surfactants comprise alkyl phenol ethoxylates.

16. A process according to claim 10, wherein the surfactants comprise amphoteric surfactants.

17. A process according to claim 10, wherein the surfactants comprise cationic surfactants.

18. Apparatus for use in mainly aerobic processes for the biotreatment of wastewater containing high concentrations of organic contaminants, characterized by its ability to generate high aeration levels with minimal foam production, comprising:
a. a containment vessel for holding the wastewater to be treated;
b. a frame mounted on a shaft, said shaft being capable of movement at a controllable speed in said containment vessel;
c. immobilization devices for bacterial cultures that are carried in said frame;
d. inlet and outlet conduits for controlled flow of wastewater into and out from the containment vessel.

19. Apparatus according to claim 18, wherein the immobilization devices comprise porous sponges.

20. Apparatus according to claim 19, wherein the porous sponges comprise a material selected from the group consisting of flexible foamed polyurethane, polypropylene, polystyrene, latex , rubber, glass, metal and ceramic materials.

21. Apparatus according to claim 19, wherein the porous sponges are in the form of round disks, having a thickness of about 1 to 5 cm, said disks being arranged in a parallel array, said array being centrally mounted on the rotating shaft.

22. Apparatus according to claim 19, wherein the porous sponges are in the form of cubes having a volume of between 1 and 125 cm³, said cubes being contained in wire cage attached to the rotating frame, said cage being of a construction that permits free flow of wastewater therethrough.

23. Apparatus according to claim 19, wherein the porous sponges are in the form of hollow cylinders with an internal mechanical support, attached to the rotating frame, said hollow cylinders having an external diameter of 8 to 50 cm, and internal diameter of 3 to 40 cm.

24. Apparatus according to any of claims 18 to 23, wherein the shaft rotational speed is in the range of about 0.3 to 5 rpm.

25. A modular apparatus for use according to claim 18, comprising two units of the apparatus defined in any one of claims 18 to 24, each of which said units of apparatus being connected serially, the outlet conduit of one unit being connected to the inlet conduit of the second unit.

26. Use of bacterial consortium BIO-V for the biotreatment of industrial wastewater.

27. Use of bacterial consortium BIO-V for the preparation of immobilization devices comprising said bacterial consortium and a carrier, substantially as described in the specification.

28. The bacterial consortium BIO-V (accession no. ATCC 202214).
